# EUROPÄISCHE PATENTSCHRIFT

(11) **EP 1 362 215 B1**
(45) Veröffentlichungstag und Bekanntmachung des Hinweises auf die Patenterteilung: **15.02.2012**
(21) Anmeldenummer: 01273660.9
(22) Anmeldetag: 08.12.2001
(51) Int. Cl.: G01B 11/02, G01B 17/00, G01B 21/02

(54) **VERFAHREN UND VORRICHTUNG ZUR LÄNGEN-, FLÄCHEN- UND VOLUMENBESTIMMUNG**
METHOD AND DEVICE FOR MEASURING LENGTH, AREA OR VOLUME
PROCEDE ET DISPOSITIF POUR MESURER LA LONGUEUR, LA SUPERFICIE OU LE VOLUME

(30) Priorität: 03.02.2001 DE 10104877
(43) Veröffentlichungstag der Anmeldung: 19.11.2003
(73) Patentinhaber: ROBERT BOSCH GMBH, 70442 Stuttgart (DE)
(72) Erfinder: LEUTZ, Steffen, 74889 Sinsheim (DE); LUGINSLAND, Juergen, 70794 Filderstadt (DE); GUENTHER, Clemens, 76275 Ettlingen (DE)
(86) Internationale Anmeldenummer: PCT/DE2001/004635
(87) Internationale Veröffentlichungsnummer: WO 2002/063238

(56) Entgegenhaltungen:
- DE-A- 19 720 280
- DE-A- 19 836 812
- US-A- 4 730 190
- US-A- 5 148 411
- US-A- 6 137 564

## Beschreibung

### Stand der Technik

Die vorliegende Erfindung betrifft ein Verfahren und eine Vorrichtung zur Längen-, Flächen und Volumenbestimmung unter Verwendung eines Entfernungsmessgerätes.

Aus der DE 198 48 628 A1 ist bereits ein Verfahren und eine Vorrichtung zur Flächen- und Raumvermessung bekannt, das darauf beruht, dass von einer zentralen Stelle in dem zu vermessenden Raum alle zu erfassenden Raum- und Flächeneckpunkte mit einem Laserstrahl anvisiert und beaufschlagt werden. Von dem jeweils reflektierten Laserstrahl werden - aus der Entfernung und den zugehörigen Winkeln - die 3D-Werte der Eckpunkte ermittelt und eine maßstabsgerechte Zeichnung erstellt. Die in der DE 198 48 628 A1 offenbarte Vorrichtung umfasst einen Laserentfernungsmesser bestehend aus einem Lasersender und einem Laserempfänger, der über eine Kipp- und Dreheinrichtung zur Ausrichtung und Winkelmessung auf einem Stativ angebracht ist. Desweiteren umfasst die Vorrichtung der DE 198 48 628 A1 ein Zielfernrohr und eine elektronische Auswerteeinheit zur Winkeldaten- und Entfernungsdaten-Erfassung und -Übergabe sowie einen damit verbundenen Computer.

Das in der DE 198 48 628 A1 offenbarte Verfahren ist recht aufwendig und bedarf einer längeren Einweisung des Bedieners, da bei jeder Messung zuvor unter anderem ein Bezugskoordinatensystem ermittelt werden muss. Desweiteren ist ein zusätzlicher externer Computer für das vorgestellte Verfahren notwendig, der die Kosten und die Bedienerfreundlichkeit dieses Messsystems zusätzlich negativ beeinflusst.

Aus dem Katalog "Gewerbliche Elektrowerkzeuge: Bosch Programm 2000/2001", der Firma Robert Bosch GmbH, D-70442 Stuttgart, Deutschland ist ein Laserentfernungsmessgerät("DLE 30 Laser plus") bekannt, mit dem Strecken, Flächen und Räume gemessen werden können. Dieses Gerät besitzt ein mehrzeiliges Anzeigefeld, in dem bei einem gewählten Messmodus (Auswahl, ob eine Strecke, eine Fläche oder ein Raum bemessen werden soll), die Art der Messung und die zu messenden Längen in symbolischer Darstellung eingeblendet werden.

Desweiteren besitzt das Laserentfernungsmessgerät "DLE 30 Laser plus" ein Tastenfeld dessen einzelne Tasten jeweils einem Messmodus zugeordnet sind. Durch Betätigen einer dieser Tasten wird der entsprechende Messmodus, der dieser Taste zugeordnet ist, ausgewählt und die gewünschte Messgröße kann durch Auslösen des Messvorganges bestimmt werden.

Dieses Gerät besitzt den Nachteil, dass das verwendete Messsignal ein Laserstrahl ist, der in keinem Fall in das Auge des Bedieners beziehungsweise anderer in der Umgebung der Messung befindlicher Personen gelangen darf, da dort irreversible Schädigungen der Netzhaut auftreten können. Ebenso ist dieses Messgerät noch relativ groß und schwer für ein handgehaltenes Messgerät.

US 4 730 190 A offenbart ein meßgerät zur Messung von Distanzen und zur Berechnung von Flächen und Volumen.

Der Erfindung liegt daher die Aufgabe zugrunde, ein Verfahren und eine Vorrichtung zur Längen-, Flächen- und Raumberechnung zu schaffen, welche in ihren Messergebnissen relativ genau sind und dabei für den Benutzer einfach und intuitiv zu verstehen und sicher zu bedienen sind.

Diese Aufgabe wird erfindungsgemäß gelöst durch die Merkmale der unabhängigen Ansprüche. Zweckmässige Ausgestaltungen und Weiterentwicklungen der Erfindung sind in den Unteransprüchen aufgezeigt.

### Vorteile der Erfindung

Das erfindungsgemäße Verfahren und die nach diesem Verfahren arbeitende Vorrichtung zur Längen-, Fächen- und Volumenmessung haben den Vorteil, das mit nur einer einzelnen Taste des Tastenfeldes der gewünschte Messmodus eingestellt und auch gewechselt werden kann.

Dadurch bleibt das Tastenfeld des Messgerätes übersichtlich, was zu einem leichten Verständnis und einer einfachen Bedienbarkeit des Gerätes führt.

Ein einmal über die eindeutige Messmodustaste des Gerätes ausgewählter Messmodus wird in schematischer graphischer Darstellung im Anzeigefeld des Messgerätes angegeben und kann so vom Bediener in einfacher Weise kontrolliert werden.

In vorteilhafter Weise braucht der Bediener bei dem erfindungsgemäßen Verfahren nach Auswahl des gewünschten Messmodus selbst nur noch einzelne Streckenmessungen durchzuführen, die ein integrierter Rechner im Messgerät nach Abschluss der erforderlichen Messungen auswertet und die gewünschten Flächen- oder Volumenmaße selbsttätig bestimmt und im Anzeigefeld des Messgerätes unverzüglich darstellt.

Das Anzeigefeld des erfindungsgemäßen Messgerätes zeigt dabei den zuletzt gemessenen Einzelwert zusammen mit dem vom Rechner bestimmten Strecken-, Flächen- oder Volumenmaß an.

Der einfachen Bedienbarkeit und dem intuitiven Verständnis des Messgerätes kommt es entgegen, dass durch das erfindungsgemäße Verfahren dem Benutzer im Anzeigefeld signalisiert wird, welche Streckenmessungen er zur Bestimmung eines Flächen- oder Volumenmaßes noch braucht. Der Bediener wird durch eine symbolische graphische Darstellung im Anzeigefeld des Messgerätes aufgefordert, die noch benötigten Streckenmessungen auszuführen. Dies führt zu einem nahezu selbsterklärenden Messgerät. Eine Schulung oder das Studium umfangreicher Bedienungshandbücher entfällt bei dem erfindungsgemäßen Messgerät.

Zur sicheren und einfachen Nutzung des Messgerätes trägt ebenfalls in vorteilhafter Weise bei, dass dem Bediener im Anzeigefeld des Gerätes signalisiert wird, ob der aktuelle Messvorgang noch anhält. Das Ende einer jeden Einzelmessung wird durch ein zusätzliches Signal, wie beispielweise ein Signalton angezeigt.

Vorteilhaft für die Bedienbarkeit des Messgerätes ist zudem, dass die Messrichtung durch ein mit dem eigentlichen Messsignal ausgesendetes optisches Signal kenntlich gemacht werden kann. Im Falle der Verwendung eines Ultrschall-Entfernungsmessers kann so der mit dem Gerät angepeilte Referenzpunkt überprüft werden.

Ein im Messgerät integrierter elektronischer Speicher ermöglicht es, in vorteilhafter Weise, Messwerte zu sichern, unterschiedliche Messwerte zu addieren und abgespeicherte Messwerte wieder aufzurufen und im Anzeigefeld des Messgerätes darzustellen.

Der im Messgerät integrierte Rechner und sein elektronischer Speicher können in vorteilhafter Weise über Tasten des Bedienfeldes des Messgerätes bedient werden.

### Zeichnung

In der Zeichnung ist ein Ausführungsbeispiel der Erfindung dargestellt, das in der nachfolgenden Beschreibung näher erläutert wird.

Es zeigen:
Fig. 1 eine perspektivische Darstellung einer erfindungsgemäßen Vorrichtung zur Längen-, Flächen und Volumenbestimmung,
Fig. 2 ein vereinfachtes Ablaufdiagramm des erfindungsgemäßen Verfahrens zur Längen-, Flächen und Volumenbestimmung.

### Beschreibung eines Ausführungsbeispiels

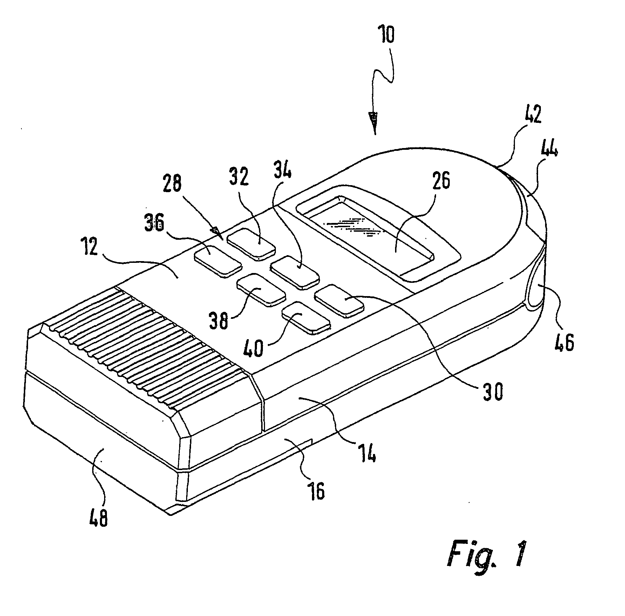

Die in Figur 1 in perspektivischer Ansicht dargestellte, erfindungsgemäße, handgehaltene Vorrichtung zur Längen-, Flächen- und Volumenmessung, die im Folgenden kurz als Messgerät 10 bezeichnet wird, besitzt ein Gehäuse 12, welches im dargestellten Ausführungsbeispiel aus einer oberen und einer unteren Halbschale 14 beziehungsweise 16 besteht. Im Gehäuse 12 integriert und in Figur 1 daher nicht sichtbar, ist eine Sende- und eine Empfangseinrichtung 18 beziehungsweise 20 für das Messsignal sowie ein interner Rechner 22 mit zugeordnetem Speicher 24.

Das Gehäuse 12 weist ein Anzeigefeld 26 und ein Tastenfeld 28 auf. Das Tastenfeld 28 besitzt im vorliegenden Ausführungsbeispiel des erfindungsgemäßen Messgerätes 10 eine Taste 30 zum Ein- und Ausschalten des Messgerätes, eine Taste 32 zur Auswahl des Messmodus und eine Messtaste 34 zum Start eines jeden Messvorganges. Ferner umfasst das Tastenfeld 28 im vorliegenen Ausführungsbeispiel eine Taste 36 zur Wiedergabe des Speicherinhaltes eines Speichers 24 des geräteinternen Rechners 22 sowie eine Taste 38 zur automatischen Addition des letzten aktuellen Messwertes zum bereits vorliegenden Speicherinhalt des Speichers 24. Durch einmalige Betätigung einer Taste 40 des Tastenfeldes 28 lässt sich der in dem Anzeigefeld 26 dargestellte, aktuelle Messwert löschen. Zweimalige Betätigung der Taste 40 löscht den Inhalt des Speichers 24 des internen Rechners 22.

An der Stirnseite 42 des Gehäuses 12 befindet sich eine Öffnung 44 für den Austritt des Messsignals aus dem Gehäuse 12 beziehungsweise für den Wiedereintritt des reflektierten Signales in das Gehäuse 12. In dem hier vorliegenden Ausführungbeispiel handelt es sich bei dem benutzten Messsignal um Ultraschall. Prinzipiell ist die Erfindung jedoch nicht auf die Verwendung von Ultraschall als Messsignal begrenzt. Auch Wellen anderer Frequenzen lassen sich zur Entfernungsmessung verwenden.

In der Stirnseite 42 des Messgerätes 12 befindet sich eine zweite Öffnung 46, aus der ein zum Messsignal paralleles, optisches Signal austreten kann. Mit Hilfe dieses optischen Signals ist es bei einer Messung möglich, den angepeilten Bezugspunkt genau zu bestimmen.

Die rückwärtige Seite 48 des Gehäuses 12 des erfindungsgemäßen Messgerätes 10 dient als Referenzebene für die Längenbestimmungen.

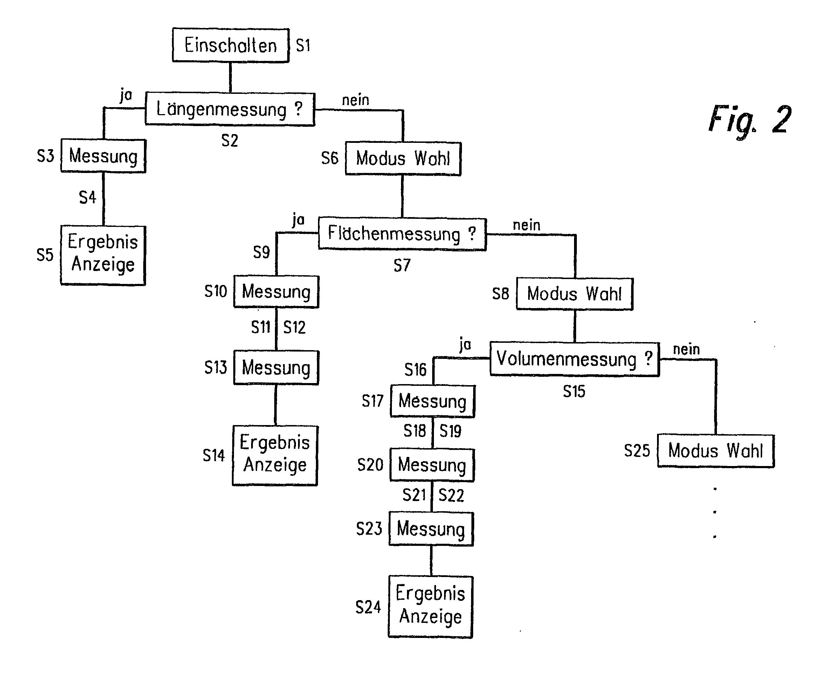

Das in Figur 2 dargestellte Flussdiagramm beschreibt den Ablauf und die Anwendung von mehreren, mit der erfindungsgemäßen Vorrichtung, möglichen Messfunktionen. Das Gerät verfügt über verschiedene Messfunktionen, die durch wiederholtes Drücken der Messmodustaste ausgewählt werden können. Die Reihenfolge bei Betätigung der Messmodustaste 32 ist dabei: Messung der Länge, Messung der Fläche, Messung des Volumens.

Das erfindungsgemäße Verfahren zur Längen-, Flächen- und Volumenbestimmung wird im Folgenden anhand der einzelnen Verfahrenschritte (S) eines Ausführungsbeispieles näher beschrieben.

Nach dem Einschalten des Gerätes (S1) mittels der Einschalttaste 30 befindet sich das Messgerät 10 automatisch in der Funktion Längenmessung. Durch eine blinkende Strecke im Anzeigefeld 26 des Messgerätes 10 wird der Benutzer aufgefordert eine Längenmessung durchzuführen. Der Benutzer hat nun zu entscheiden (S2), ob er die Längenmessung oder eine andere Messfunktion ausführen will.

Ist eine Längenmessung gewünscht, so kann diese direkt durch Betätigung der Messtaste 34 des Tastenfeldes 28 gestartet werden (S3). Der Benutzer hat zuvor das Messgerät 10 auszurichten, das heisst mit dessen Rückseite 48 an einem Punkt aufzusetzen, von wo aus die Messung beginnen soll. Das Messgerät 10 wird rechtwinklig auf die Zielfläche ausgerichtet und der Messvorgang durch Betätigung der Messtaste 34 gestartet.

Während des Messvorganges wird dem Benutzer im Anzeigefeld 26 durch eine von rechts nach links durchlaufend symbolische Strecke angezeigt, dass eine Messung aktiv ist (S4). Die Beendigung einer jeden Einzelmessung wird durch ein zusätzliches akustisches Signal angezeigt und der aktuelle Messwert der Längenmessung erscheint unverzüglich unten rechts im Anzeigefeld 26 des Messgerätes 10 (S5).

Sollte die Ermittelung einer Streckenlänge geräteintern nicht möglich sein, so unterbleibt das akustische Signal und in der Anzeige 26 wird signalisiert, dass die Messung nicht erfolgreich war. Das Messgerät steht für weitere Messungen dann wieder zur Verfügung.

Ist keine Längenmessung - wohl aber eine Flächen- oder Volumenmessung - erwünscht, so muss nach dem Einschalten des Messgerätes (S1) die Modustaste 32 betätigt werden (S6). Nach einmaliger Betätigung der Modustaste 32 (S6) erscheint in der unteren linken Ecke des Anzeigefeldes 26 des Gerätes 10 ein symbolisches Quadrat, das anzeigt, dass das Messgerät 10 nun im Flächenmessmodus ist. Der Benutzer hat jetzt zu entscheiden (S7), ob er eine Flächenmessung oder eine Volumenmessung durchführen will.

Ist eine Volumenmessung erwünscht, so ist die Modustaste 32 noch einmal zu betätigen (S8). Die symbolische Darstellung eines Würfels im Anzeigefeld 26 des Messgerätes 10 verdeutlicht dem Nutzer in diesem Fall, dass sich das Gerät nun im Volumenmessmodus befindet.

Für den Fall, dass eine Flächenmessung vorgenommen werden soll, ist das Messgerät 10 nach Ausführung des Schrittes S6 zur Flächenmessung bereit.

Ist das Messgerät 10 bereits eingeschaltet und nicht im Flächenmessmodus, so ist die Modustaste 32 sooft zu drücken, bis das Quadrat in der linken unteren Ecke des Anzeigefeldes 26 erscheint.

Der Benutzer des Messgerätes 10 wird durch eine erste blinkende Seite des symbolischen Quadrates in der Anzeige 26 des Messgerätes 10 aufgefordert (S9) eine erste Längenmessung zur Ermittelung der gesuchten Fläche auszuführen.

Der Messvorgang wird mit der Messtaste 34 gestartet (S10) und wiederum durch ein akustisches Signal vom Gerät als beendet erklärt.

In dem Anzeigefeld 26 des Messgerätes 10 erscheint der ermittelte Längenwert für die erste Seite der gesuchten Fläche. Die entsprechende Seite des symbolischen Quadrats in der Anzeige 26 blinkt nun nicht mehr (S11).

Durch eine zweite blinkende Seite des Quadrates in der Anzeige 26 des Messgerätes 10 wird der Benutzer aufgefordert (S12) eine zweite, zur ersten Messung orthogonale, Längenmessung zur Bestimmung der gesuchten Fläche durchzuführen.

Nochmaliges Betätigen der Messtaste 34 (S13) liefert die zur Flächenberechnung benötigte zweite Streckenlänge. Die zuletzt bestimmte Streckenlänge und der vom internen Rechner 22 des Messgerätes 10 ermittelte Flächeninhalt aus den beiden vorherigen Längenmessungen wird im Anzeigefeld 26 des Messgerätes 10 angezeigt (S14).

Befindet sich das Messgerät 10 im Volumenmessmodus (S8), so wird dies durch einen symbolischen Würfel in der linken unteren Ecke des Anzeigefeldes 26 dargestellt. Ist das Gerät 10 bereits eingeschaltet und nicht im Volumenmessmodus, so ist die Modustaste 32 sooft zu drücken, bis der symbolische Würfel in der linken unteren Ecke des Anzeigefeldes 26 des Messgerätes 10 erscheint.

Eine erste blinkende Seite des symbolischen Würfels fordert den Benutzer auf, eine erste Streckenlänge des gesuchten Volumens zu messen (S16).

Durch Betätigung der Messtaste 34 (S17) wird diese erste Länge ermittelt und im Anzeigefeld 26 des Messgerätes 10 dargestellt. Die erste zuvor blinkende Seite blinkt nun nicht mehr (S18).

Eine zweite - jetzt blinkende - Seite des Würfels fordert den Benutzer auf, eine zweite orthogonale Strecke zur Volumenbestimmung zu messen (S19). Durch Betätigung der Messtaste 34 (S20) wird diese zweite Streckenlänge ermittelt.

Nach Beendigung des Messvorganges zeigt die Anzeige 26 des Messgerätes 10 die zuletzt gemessene Streckenlänge zusammen mit einem aus den letzten beiden Streckenmessungen ermittelten Flächeninhalt an. Die zweite, während der Messung blinkende Strecke des symbolischen Würfels im Anzeigefeld 26 des Messgerätes 10 blinkt nicht mehr (S21).

Durch eine dritte nun blinkende Strecke im Anzeigefeld 26 des Messgerätes 10 wird der Benutzer aufgefordert eine dritte, zu den beiden zuvor gemessenen Strecken, orthogonale Strecke zur Ermittelung des gesuchten Volumeninhaltes zu messen (S22).

Durch Betätigung der Messtaste 34 (S23) wird die dritte benötigte Streckenlänge ermittelt. Diese dritte Streckenlänge wird zusammen mit dem vom internen Rechner 22 des Messgerätes 10 aus den drei letzten Längenmessungen errechneten Volumeninhalt im Anzeigefeld 26 des Messgerätes 10 dargestellt (S24).

Durch wiederholtes drücken der Messmodustaste 32 lässt sich bei dem erfindungsgemäßen Verfahren der Messmodus wechseln (S25). Der aktuell gewählte Messmodus wird jeweils durch die entsprechende symbolische Darstellung einer Strecke (für die Längenmessung) eines Quadrates (für die Flächenbestimmung) oder eines Würfels (für die Volumenbestimmung) in der unteren rechten Ecke des Anzeigefeldes 26 des Messgerätes 10 aufgezeigt.

### Bezugszeichenliste

- 10: Messgerät
- 11 12: Gehäuse
- 13 14: obere Halbschale
- 15 16: untere Halbschale
- 17 18: Sendeeinrichtung
- 19 20: Empfangseinrichtung
- 21 22: Interner Rechner
- 23 24: Speicher des Rechners
- 25 26: Anzeigefeld
- 27 28: Tastenfeld
- 29 30: Ein/Aus Taste
- 31 32: Messmodusauswahltaste
- 33 34: Messtaste
- 35 36: Wiedergabetaste für den Speicher
- 37 38: Taste für Speicheraddition
- 39 40: Löschtaste
- 41 42: Stirnseite des Gehäuses
- 43 44: Öffnung
- 45 46: Öffnung
- 47 48: Rückwärtige Seite
- S1: Einschalten
- S2: Entscheidung Längenbestimmung: ja oder nein
- S3: Messung starten
- S4: Messung aktiv
- S5: Ergebnisanzeige der Längenbestimmung
- S6: Betätigung der Messmodusauswahltaste
- S7: Entscheidung Flächenbestimmung: ja oder nein
- S8: Betätigung der Messmodusauswahltaste
- S9: Aufforderung zur 1. Messung für die Flächenbestimmung
- S10: 1. Messung für Flächenbestimmung
- S11: Anzeige des 1. Längenwertes für die Flächenbestimmung
- S12: Aufforderung zur 2. Messung für die Flächenbestimmung
- S13: 2. Messung für die Flächenbestimmung
- S14: Anzeige des 2. Längenwertes und des Flächenmaßes
- S15: Entscheidung Volumenmessung: ja oder nein
- S16: Aufforderung zur 1. Längenmessung für die Volumenbestimmung
- S17: 1. Längenmessung für die Volumenbestimmung
- S18: Anzeige des 1. Längenwertes für die Volumenbestimmung
- S19: Aufforderung zur 2. Messung für die Volumenbestimmung
- S20: 2. Längenmessung für die Volumenbestimmung
- S21: Anzeige des 2. Längenwertes und des Flächenmaßes
- S22: Aufforderung zur 3. Längenmessung für die Volumenbestimmung
- S23: 3. Längenmessung für die Volumenbestimmung
- S24: Anzeige des 3. Längenwertes und des Volumenmaßes
- S25: Betätigung Messmodusauswahltaste

## Patentansprüche

1. Verfahren zur Längen messung Flächen-, und/oder Volumenbestimmung mittels eines Entfernungsmessgerätes (10) mit einer Sende- (18) und einer Empfangseinheit (20) in einen Gehäuse (12), mit einem Tastenfeld (28) zur Bedienung des Messgerätes (10) und einem integrierten Rechner (22) zur direkten Messdatenauswertung sowie mit einem Anzeigefeld (26), das nach Vorauswahl eines gewünschten Messmodus durch den Bediener (S2 S6,S8), die zur Bestimmung der gewünschten Messgröße noch erforderlichen Einzelmessungen aktiv in symbolischer Graphik darstellt, **dadurch gekennzeichnet, dass** der Bediener durch Betätigung einer einzigen Taste (32) des Tastenfeldes (28) des Messgerätes (10) zwischen den möglichen Messmodi Längenmessung, Flächen-, und/oder Volumenbestimmung wechseln kann.

2. Verfahren nach Anspruch 1, **dadurch gekennzeichnet, dass** der durch die Taste (32) gewählte Messmodus durch eine symbolische, graphische Darstellung im Anzeigenfeld (26) des Messgerätes (10) bestätigt wird.

3. Verfahren nach Anspruch 1 oder 2, **dadurch gekennzeichnet, dass** die dem gewählten Messmodus entsprechende Messgröße durch den im Messgerät (10) integrierten Rechner (22) aus einzelnen, vom Bediener vorzunehmenden Streckenmessungen ermittelt wird und nach Abschluss der Messung in dem Anzeigefeld (26) des Messgerätes (10) automatisch angezeigt wird.

4. Verfahren nach Anspruch 3, **dadurch gekennzeichnet, dass** eine noch zur Ermittlung einer dem gewählten Messmodus entsprechenden Messgröße erforderliche Streckenmessung durch eine blinkende Strecke in der den gewählten Messmodus symbolisierenden, graphischen Darstellung in dem Anzeigefeld (26) des Messgerätes (10) vom Bediener eingefordert wird.

5. Verfahren nach Anspruch 4, **dadurch gekennzeichnet, dass** für die Dauer einer jeden Streckenmesssung das Anzeigefeld (26) des Messgerätes (10) anzeigt, dass das Messgerät (10) aktiv ist.

6. Verfahren nach Anspruch 5, **dadurch gekennzeichnet, dass** das Ende einer jeder erfolgreichen Streckenmessung akustisch angezeigt wird.

7. Verfahren nach Anspruch 6, **dadurch gekennzeichnet, dass** nach dem Ende einer jeden Streckenmessung das Ergebnis der jeweiligen letzten Streckenmessung zusammen mit der vom Rechner (22) ermittelten, dem gewählten Messmodus entsprechenden Messgröße in dem Anzeigefeld (26) des Messgerätes (10) dargestellt wird.

8. Verfahren nach einem der vorherigen Ansprüche, **dadurch gekennzeichnet, dass** die Messrichtung des Messgerätes durch ein mit dem Messsignal ausgesandtes, optisches Signal kenntlich gemacht wird.

9. Entfernungsmessgerät zur Längenmessen, Flächen- und/oder Volumenbestimmung mit einer sende (18) und einer Empfangseinheit(20) in einem Gehäuse (12), mit einem Tastenfeld (28) zur Bedienung des Messgerätes (10) und mit einem integrierten Rechner (22) zur direkten Messdatenauswertung sowie einem Anzeigefeld (26) zur Darstellung der Messergebnisse, **dadurch gekennzeichnet, dass** das Tastenfeld (28) eine eingige Taste (32) für die Auswahl verschiedener Messmodi besitzt, und dass das Anzeigefeld (26) des Messgerätes (10) geeignet ist die vom internen Rechner (22) noch benötigten Messwerte zur Bestimmung der dem gewählten Messmodus entsprechenden Messgröße aktiv in symbolischer Graphik dargustellen.

10. Entfernungsmessgerät nach Anspruch 9 **dadurch gekennzeichnet**, das der interne Rechner (22) des Messgerätes (10) einen elektronischen Speicher (24) zur Sicherung von Messwerten, zur Addition von Messwerten und zur Wiedergabe von gemessenen Werten besitzt, dessen Inhalt im Anzeigefeld (26) des Messgerätes (10) dargestellbar ist.

11. Entfernungsmessgerät nach Anspruch 10 **dadurch gekennzeichnet**, das der interne Rechner (22) des Messgerätes (10) über Tasten (36,38,40) des Tastenfeldes (28) des Messgerätes (10) bedienbar ist.

## Claims

1. Method for measuring length and determining area and/or volume by means of a distance measuring instrument (10) having a transmitting unit (18) and a receiving unit (20) in a housing (12), having a keypad (28) for operating the measuring instrument (10) and an integrated computer (22) for measured data evaluation, and having a display panel (26) which uses symbolic graphics to actively display the individual measurements still required to determine the desired measured value after preselection of a desired measurement mode by the operator (S2, S6, S8), **characterized in that** the operator can change between the possible measurement modes of the length measurement, and determination of area and/or volume by actuating an individual key (32) of the keypad (28) of the measuring instrument (10).

2. Method according to Claim 1, **characterized in that** the measurement mode selected by the key (32) is actuated by a symbolic, graphical representation in the display field (26) of the measuring instrument (10).

3. Method according to Claim 1 or 2, **characterized in that** the measured variable corresponding to the selected measurement mode is determined by the computer (22), integrated in the measuring instrument (10), from individual distance measurements to be undertaken by the operator, and is automatically displayed after conclusion of the measurement in the display panel (26) of the measuring instrument (10).

4. Method according to Claim 3, **characterized in that** a distance measurement still required for determining a measured variable corresponding to the selected measurement mode is requested by the user by a flashing segment in the graphic representation, symbolizing the selected measurement mode, in the display panel (26) of the measuring instrument (10).

5. Method according to Claim 4, **characterized in that** the display panel (26) of the measuring instrument (10) indicates that the measuring instrument (10) is active for the duration of each distance measurement.

6. Method according to Claim 5, **characterized in that** the end of each successful distance measurement is indicated acoustically.

7. Method according to Claim 6, **characterized in that** at the end of each distance measurement the result of the respective last distance measurement is displayed in the display panel (26) of the measuring instrument (10) together with the measured variable determined by the computer (22) and corresponding to the selected measurement mode.

8. Method according to one of the preceding claims, **characterized in that** the measuring direction of the measuring instrument is identified by an optical signal emitted with the measurement signal.

9. Distance measuring instrument for measuring distance and determining area and/or volume having a transmitting unit (18) and a receiving unit (20) in a housing (12), having a keypad (28) for operating the measuring instrument (10) and having an integrated computer (22) for direct measurement data evaluation as well as a display panel (26) for displaying the measurement result, **characterized in that** the keypad (28) has a single key (32) for selecting various measurement modes, and **in that** the display panel (26) of the measuring instrument (10) is suitable for actively displaying symbolic graphics of the measured values, still required by the internal computer (22), for determining the measured value corresponding to the selected measurement mode.

10. Distance measuring instrument according to Claim 9, **characterized in that** the internal computer (22) of the measuring instrument (10) has an electronic memory (24) for backing up measured values, for adding measured values and for reproducing measured values and whose content can be displayed in the display panel (26) of the measuring instrument (10).

11. Distance measuring instrument according to Claim 10, **characterized in that** the internal computer (22) of the measuring instrument (10) can be operated via keys (36, 38, 40) of the keypad (28) of the measuring instrument (10).

## Revendications

1. Procédé de mesure de longueur, détermination de surface et/ou de volume au moyen d'un appareil de télémétrie (10) comprenant une unité d'émission (18) et une unité de réception (20) dans un boîtier (12), comprenant un clavier (28) pour commander l'appareil de mesure (10) et un calculateur intégré (22) pour l'interprétation directe des données de mesure et comprenant aussi une zone d'affichage (26) qui, après la présélection d'un mode de mesure souhaité par l'opérateur (S2, S6, S8), représente activement sous forme graphique symbolique les mesures individuelles encore nécessaires pour déterminer la grandeur mesurée souhaitée, **caractérisé en ce que** l'opérateur peut basculer entre les modes de mesure possibles Mesure de longueur, Détermination de surface et/ou Détermination de volume en actionnant une seule touche (32) du clavier (28) de l'appareil de mesure (10).

2. Procédé selon la revendication 1, **caractérisé en ce que** le mode de mesure sélectionné par la touche (32) est actionné par une représentation graphique symbolique dans la zone d'affichage (26) de l'appareil de mesure (10).

3. Procédé selon la revendication 1 ou 2, **caractérisé en ce que** la grandeur mesurée correspondant au mode de mesure sélectionné est déterminée par le calculateur (22) intégré dans l'appareil de mesure (10) à partir de mesures de segment individuelles à effectuer par l'opérateur et est affichée automatiquement dans la zone d'affichage (26) de l'appareil de mesure (10) après que la mesure ait été terminée.

4. Procédé selon la revendication 3, **caractérisé en ce qu'**une mesure de segment encore nécessaire pour déterminer une grandeur mesurée correspondant au mode de mesure sélectionné est sollicitée auprès de l'opérateur par un segment clignotant dans la représentation graphique symbolisant le mode de mesure sélectionné dans la zone d'affichage (26) de l'appareil de mesure (10).

5. Procédé selon la revendication 4, **caractérisé en ce que** pendant la durée de chaque mesure de segment, la zone d'affichage (26) de l'appareil de mesure (10) affiche que l'appareil de mesure (10) est actif.

6. Procédé selon la revendication 5, **caractérisé en ce que** la fin de chaque mesure de segment réussie est signalée de manière sonore.

7. Procédé selon la revendication 6, **caractérisé en ce qu'**après la fin de chaque mesure de segment, le résultat de la dernière mesure de segment respective est représenté dans la zone d'affichage (26) de l'appareil de mesure (10) conjointement avec la grandeur mesurée déterminée par le calculateur (22) et correspondant au mode de mesure sélectionné.

8. Procédé selon l'une des revendications précédentes, **caractérisé en ce que** la direction de mesure de l'appareil de mesure est rendue reconnaissable par un signal optique émis avec le signal de mesure.

9. Appareil de télémétrie pour la mesure de longueur, la détermination de surface et/ou de volume, comprenant une unité d'émission (18) et une unité de réception (20) dans un boîtier (12), comprenant un clavier (28) pour commander l'appareil de mesure (10) et un calculateur intégré (22) pour l'interprétation directe des données de mesure et comprenant aussi une zone d'affichage (26) pour la représentation des résultats des mesures, **caractérisé en ce que** le clavier (28) possède une seule touche (32) pour la sélection des différents modes de mesure et **en ce que** la zone d'affichage (26) de l'appareil de mesure (10) est conçue pour représenter activement sous forme graphique symbolique les valeurs mesurées encore requises de la part du calculateur interne (22) pour déterminer la grandeur mesurée correspondant au mode de mesure sélectionné.

10. Appareil de télémétrie selon la revendication 9, **caractérisé en ce que** le calculateur interne (22) de l'appareil de mesure (10) possède une mémoire électronique (24) pour sauvegarder les valeurs mesurées, pour additionner des valeurs mesurées et pour restituer des valeurs mesurées, dont le contenu peut être représenté dans la zone d'affichage (26) de l'appareil de mesure (10).

11. Appareil de télémétrie selon la revendication 10, **caractérisé en ce que** le calculateur interne (22) de l'appareil de mesure (10) peut être commandé par le biais de touches (36, 38, 40) du clavier (28) de l'appareil de mesure (10).
